# EUROPÄISCHE PATENTANMELDUNG

(11) **EP 4 657 714 A1**
(43) Veröffentlichungstag der Anmeldung: **03.12.2025**
(21) Anmeldenummer: 24178991.6
(22) Anmeldetag: 30.05.2024
(51) Int. Cl.: H02J 13/00

(54) **VORRICHTUNG UND VERFAHREN ZUM SCHUTZ EINES ELEKTROENERGIEVERSORGUNGSNETZES SOWIE ZUR AUTOMATISIERUNG UND STEUERUNG VON KOMPONENTEN EINER ELEKTRISCHEN EINRICHTUNG**

(71) Anmelder: Siemens Aktiengesellschaft, 80333 München (DE)
(72) Erfinder: Reis, Matthias, 10245 Berlin (DE); Sommer, Dirk, 13053 Berlin (DE)
(74) Vertreter: Siemens Patent Attorneys

(57) **Zusammenfassung**

Die Erfindung betrifft eine Vorrichtung (1) zum Schutz eines Elektroenergieversorgungsnetzes sowie zur Automatisierung und Steuerung von Komponenten eines Umspannwerks mit wenigstens zwei miteinander vernetzten IEDs (2), die jeweils über eine Vorverarbeitungseinheit mit wenigstens einem Messsensor (3) verbunden sind, der jeweils an einer Messstelle eines Energieversorgungsnetzes zum Erfassen einer Messgröße eingericht ist, die den Zustand des Elektroenergieversorgungsnetztes charakterisiert, wobei die Vorverarbeitungseinheit eingangsseitig mit den Messsensoren (3) verbunden ist und zum Übertragen von ausgangseitig bereitgestellten Messwerten an wenigsgten eine IEDs (2) eingerichtet sind, und wobei jede IED (2) zur Ausführung von zuvor festgelegten Schutz-, Steuer- und/oder Automatisierungsfunktionen (SSAF) eingerichtet ist. Um diese Vorrichtung dahin zu verbessern, dass diese kostengünstiger ist und gleichzeitig mit einer hohen Zuverlässigkeit betrieben werden kann, wird vorgeschlagen, dass eine Orchestrierungssoftware vorgesehen ist, die ein Orchestrierungsverfahren bereitstellt, das das basierend auf einem Leader-Election-Verfahren eine dynamische Verteilung der SSAF auf die IEDs (2) vornimmt.

## Beschreibung

Die Erfindung betrifft eine Vorrichtung zum Schutz eines Elektroenergieversorgungsnetzes sowie zur Automatisierung und Steuerung von Komponenten einer elektrischen Einrichtung mit wenigstens zwei miteinander vernetzten IEDs, die jeweils über eine Vorverarbeitungseinheit mit wenigstens einem Messsensor verbunden sind, der jeweils an einer Messstelle eines Energieversorgungsnetzes zum Erfassen einer Messgröße eingericht ist, die den Zustand des Elektroenergieversorgungsnetztes charakterisiert, wobei die Vorverarbeitungseinheit eingangsseitig mit den Messsensoren verbunden ist und zum Übertragen von ausgangseitig bereitgestellten Messwerten an wenigstens eine IEDs eingerichtet sind, und wobei die IED zur Ausführung von zuvor festgelegten Schutz-, Steuer- und/oder Automatisierungsfunktionen (SSAF) eingerichtet ist.

Eine solche Vorrichtung ist aus dem Stand der Technik bereits bekannt. So weisen beispielsweise Umspannwerke als elektrische Einrichtung Schutz- und Automatisierungsgeräte auf. Die Schutzgeräte sind mit Messsensoren verbunden, die an einer Messstelle des Elektroenergieversorgungsnetzes beispielsweise an einem Abgang eine das Elektroenergieversorgungsnetz charakterisierende Messgröße erfassen. Aus der Meßgröße, beispielsweise ein Strom oder eine Spannung, werden digitale Messwerte erzeugt, die von Schutzalgorithmen auf das Vorliegen einer Fehlerbedingung hin überwacht werden. Liegt eine Fehlerbedingung vor, wird ein Fehlersignal erzeugt und an einen Leistungsschalter übertragen, der den fehlerbehaften Abschnitt des Elektroenergieversorgungsnetzes von dem restlichen Teil des Elektroenergieversorgungsnetzes abtrennt. Darüber hinaus überwachen vorbekannte Schutzgeräte Betreibsmittel wie beispeilsweis Transformatoren vor den Auswirkungen von Fehlern wie Erd- oder Kurzschlüssen. Auf diese Weise können Schäden an Personen oder Bauteilen den Umspannwerks vermieden werden. Automatisierungsgeräte steuern Bauteile von Umspannwerken wie beispielsweise Trenner und Schaltgeräte.

Neben Umspannwerken kommen Kraftwerke als elektrische Einrichtung in Betracht. Diese Aufzählung ist jedoch keineswegs abschließend.

Hieraus ergibt sich die Anforderung, möglichst zuverlässig Ströme und Spannungen in den Phasenleitern der Elektroenergieversorgung sowie alle anderen relevanten Betriebsmitteln kontinuierlich zu überwachen. Gleichzeitig herrschen ökonomische Randbedingungen, so dass eine maximale Zuverlässigkeit des Schutzes erreicht werden muss, wobei gleichzeitig Anschaffung, Betrieb und Wartung der hierzu notwendigen Schutzgeräte und Komponenten möglichst kostengünstig sein sollen.

### Detaillierte Beschreibung der Ausführungsbeispiele

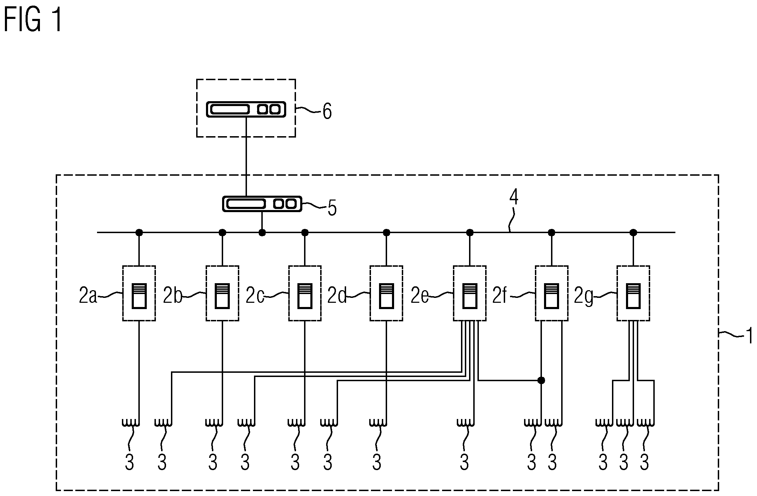

Figur 1 zeigt eine vorbekannte Vorrichtung eines figürlich nicht dargestellten Elektroenergieversorgungsnetzes. Die Vorrichtung 1 umfasst mehrere so genannte intelligente elektronische Geräte, die im Englischen als Intelligent Electronic Devices und im Folgenden als IEDs, 2a, 2b, 2c, 2d, 2e, 2f und 2g bezeichnet werden. Dabei ist jedes IED 2 mit wenigstens einem Messsensor 3 verbunden. Das IED 2e ist zum Schutz einer Sammelschiene vorgesehen. Die IED 2f hingegen dient zum Schutz eines figürlich nicht dargestellten Transformators. Hierbei kommt der so bezeichnete Differenzialschutz zum Tragen, bei dem sowohl die Ströme gemessen werden, die in den Transformator hinein, als auch die Ströme gemessen werden, die aus diesem heraus fließen. Zum Erfassen dieser Ströme sind zwei Stromwandler 3 vorgesehen. Ist die Differenz der zeitsynchron erfassten Messwerte ungleich Null, kann ein Fehler vorliegen.

Die in Figur 1 gezeigten IEDs 2 sind über einen Prozessbus 4 miteinander, sowie mit einer Schnittstelle 5 des Umspannwerks 1 verbunden. Die Schnittstelle 5 des Umspannwerks ist wiederum an ein entfernt gelegenes Kontrollzentrum 6 angeschlossen.

Dezentrale Schutzalgorithmen, wie der Überstromzeitschutz, werden auf Geräten mit direkten Zugang zu den Strom und Spannungswandlern ausgeführt. Mit anderen Worten weisen solche IEDs einen Messwandlereingang auf. Für zentralisierte Funktionen wie den Sammelschienenschutz oder das Unterstationskommunikationsgateway werden separate Geräte benötigt. Die Zuordnung eines lEDs zu einer bestimmten Schutz-, Steuer- und/oder Automatisierungsfunktion (SSAF) ist innerhalb eines klassischen digitalisierten Umspannwerks statisch festgelegt. Diese statische Zuordnung macht die Überwachung des Elektroenergieversorgungsnetzes oder die Automatisierung der Komponenten des Umspannwerkes aufwändig und kostenintensiv.

Aufgabe der Erfindung ist es daher, die eingangs genannte Vorrichtung dahin zu verbessern, dass diese kostengünstiger ist und gleichzeitig mit einer hohen Zuverlässigkeit betrieben werden kann.

Die Erfindung löst diese Aufgabe dadurch, dass eine Orchestrierungssoftware vorgesehen ist, die ein Orchestrierungsverfahren bereitstellt, das das basierend auf einem Leader-Election-Verfahren eine dynamische Verteilung der SSAF auf die IEDs vornimmt.

Durch die dynamische Verteilung der Schutz-, Steuer- und Automatisierungsfunktionen (SSAF) auf die IEDs wird die Zuverlässigkeit der Vorrichtung erhöht, da der Ausfall einer bestimmten IED nicht zwingend den Ausfall einer SSAF bedeutet. Vielmehr kann durch die dynamische Umverteilung der SSAF eines fehlerhaften IEDs auf ein IED, das voll funktionstüchtig ist, die Wirkungen der SSAF aufrecht erhalten werden. Für die konkrete Auswahl eines lEDs für eine bestimmte SSAF kommt das so genannte Verfahren der "Leader Election" zum Einsatz. Verfahren dieser Art sind dem Fachmann bekannt.

Um das "Leader Election"-Verfahren durchführen zu können verfügen alle IEDs vorteilhafterweise über einen so genannten Orchestrator. Der Orchestrator ist eine Softwarefunktion. Dabei erhält jede IED eine Liste der verfügbaren Orchestratoren vor und entscheidet nach einem Load-Balancing-Verfahren welcher Orchestrator angesprochen wird. Ein Load-Balancing-Verfahren kann z.B. auch durch eine zufällige Auswahl realisiert sein. Alle Orchestratoren synchronisieren ihren Datenstand untereinander beispielsweise mit einem so genannten Raft-Consensors-Algorithmus.

Die SSAFen benötigen eine gewisse Zeit, um nach deren Ausfall auf einem ausgefallenen IED auf einem funktionstüchtigen IED neu zu starten. Für SSAFen, deren Ausfallen über eine begrenzte Zeitdauer hinweg tolerierbar ist, kann eine solche nach Ausfall einer IED auf einer funktionstüchtigen IED einfach neu gestartet werden. Der Orchestrator wählt die IED für die neue Instanz nach einem Scoring-Verfahren aus. Der Score berechnet sich aus verschiedenen Kriterien, wie beispielsweise verfügbarem Arbeitsspeicher, freier CPU Kapazität oder dergleichen. Weisen zwei IEDs einen identischen Score auf, wird ein Zufallsgenerator verwendet, um zu entscheiden, welche IED schließlich ausgewählt wird.

Für SSAFen, deren Ausfallen über eine begrenzte Zeitdauer hinweg nicht toleriert werden kann, muss der Orchestrator wenigstens zwei Instanzen der SSAF erzeugen, die auf mindestens zwei IEDs ablaufen. Hierbei kommen für die SSAFen spezifische Redundanzkonzepte zum Einsatz.

Vorteilhafterweise sind die Messensoren als Spannungs- und/oder Stromwandler aufgeführt, wobei jede IED über einen Eingang für einen Strom- und einen Eingang für einen Spannungswandler aufweist. Bei dieser vorteilhaften Weiterentwicklung erfassen die Messsensoren, die Spannungs- oder Stromwandler, die Messgrößen kontinuierlich und stellen ausgangsseitig ein analoges Messignal bereit. Das analoge Messsignal wird zum Eingang der IEDs übertragen. Die IEDs weisen intern eine Vorverarbeitungseinheit aus, die auch als "Merging Unit" bezeichnet werden kann. Diese Merging Unit tastet die analogen Messsignale unter Gewinnung von Abtast- oder Messwerten ab und digitalisiert die Messwerte anschließend, die dann digital vorliegen. Die Vorverarbeitungseinheit kann in einer IED verbaut oder als separates Bauteil bereitgestellt sein.

Vorteilhafterweise verfügt jede IED über einen Ein- und einen Ausgang für einen Prozessbus, über den die IEDs miteinander verbunden sind. Der Prozessbus dient zum Austauschen von Messwerten, wie es beispielsweise beim Differentialschutz erforderlich ist.

Bei einer diesbeüglich zweckmäßigen Weiterentwicklung erfolgt die Messwerterfassung zeitsynchronisiert. Dies ist beispielsweise bei Zeigermesswerten notwendig, wobei neben der Amplitude des jeweiligen Stroms auch dessen genaue Phasenlage wichtig wird. Auch beim Sammelschienenschutz ist eine zeitsynchronisierte Erfassung von Messwerten erforderlich.

Bei einer der bevorzugten Ausgestaltungen der Erfindung sind die IEDs zumindest teilweilweise über einen Stationsleitbus miteinander verbunden, wobei der dynamische Austausch der SSAFs über den Stationsleitbus erfolgt. Ein Stationsleitbus unterscheidet sich von einem Prozessbus durch die Geschwindigkeit der Datenleitung. An dem Prozessbus werden wesentlich höhere Anforderungen als an einen Stationsleitbus gestellt.

Bevorzugt weist jede IED einen binären Ein- und einen binären Ausgang auf. Die binären Ein- und Ausgänge dienen zum Schalten eines Schalter beispielsweise Leistungsschalters.

Vorteilhafterweise weisen die IEDs eine CPU mit mehr als 4.000 MIPS bezogen auf den Dhrystones Benchmark auf. Die IEDs müssen einen Prozessor mit einer ausreichenden Leistung aufweisen, die mithilfe des Dhrystone Benchmarks charakterisiert werden kann.

Die Erfindung betrifft auch ein Verfahren zum Schutz eines Elektroenergieversorgungsnetzes zur Automatisierung und Steuerung von Vorgängen oder Bauteilen eines Umspannwerks mit den Schritten:
- Erfassen einer den Zustand des Elektroenergieversorgungsnetzes charakterisierenden Messgröße an mehreren Messstellen durch Messsignale bereitstellenden Messsensoren,
- Übertragen der Messsignale an wenigstens eine Vorverarbeitungseinheit,
- Erzeugen von digitalen Messwerten aus den Messsignalen durch die Vorverarbeitungseinheit,
- Senden der digitalen Messwerte an wenigstens eine IED, wobei die IEDs Schutz-, Steuer- und Automatisierungsfunktionen (SSAF) ausführen.

Ausgehend von diesem vorbekannten Verfahren liegt der Erfindung die Aufgabe zu Grunde das besagte Verfahren dahin zu verbessern, dass es kostengünstig und gleichzeitig mit einer hohen Zuverlässigkeit durchgeführt werden kann.

Die Erfindung löst diese Aufgabe dadurch, dass die SSAF mithilfe eines Orchestrierungsverfahrens dynamisch auf die IEDs verteilt werden.

Die Vorteile des erfindungsgemäßen Verfahrens wurden bereits weiter oben im Zusammenhang mit der erfindungsgemäßen Vorrichtung ausführlich dargelegt. Diese Ausführungen gelten hier entsprechend.

Weitere zweckmäßige Ausgestaltungen und Vorteile der Erfindung sind Gegenstand der nachfolgenden Beschreibung von Ausführungsbeispielen der Erfindung under Bezug auf die Figuren der Zeichnung, wobei gleiche Bezugszeichen auf gleich wirkende Bauteile verweisen und wobei
Figur 1 eine Vorrichtung gemäß dem Stand der Technik und
Figur 2 ein Ausführungsbeispiel einer erfindungsgemäßen Vorrichtung verdeutlichen.

Figur 1 wurde bereits weiter oben im Zusammenhang mit der Diskussion des Standes der Technik erläutert.

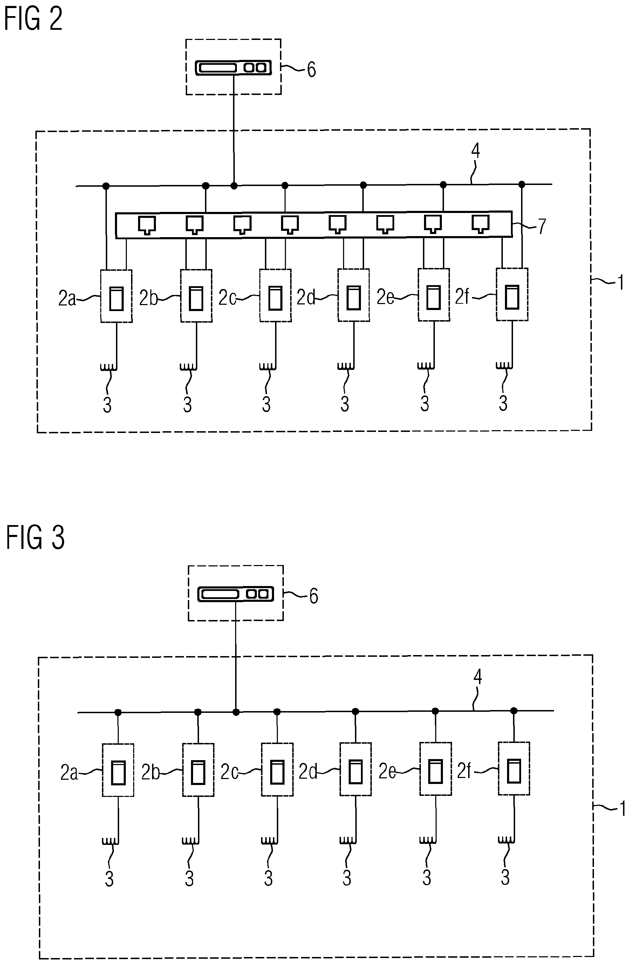

Figur 2 zeigt ein Ausführungsbeispiel der erfindungsgemäßen Vorrichtung 1. Die Vorrichtung 1 verfügt über IEDs, also Intelligent Electronic Devices 2a, 2b, 2c, 2d, 2e und 2f, die sowohl über einen Prozessbus 7 als auch über einen Stationsleitbus 4 miteinander verbunden sind. Die IED 2 verfügen jeweils über einen Messwandlereingang, über den die jeweilige IED mit einem Strom- oder Spannungswandler 3 verbunden ist. Die Messwandler 3 stellen wie bereits im Zusammenhang mit Figur 1 beschrieben ausgangsseitig analoge Messwerte - wie Strom oder Spannung - bereit, die von der IED unter Gewinnung von Abtast- oder Messwerten zeitsynchron abgetastet werden. Anschließend erfolgt eine Digitalisierung der Messwerte, so dass digitale Messwerte vorliegen. Die erhaltenen digitalen Messwerte werden von in der IED verbauten Vorverarbeitungseinheit (Merging Unit) zu Datentelegrammen zusammengefasst, wobei diese sowohl eine Amplitude als auch eine Phasenlage umfassen. Mit anderen Worten sind Zeigermesswerte bereitgestellt. Die Datentelegramme werden über dem Prozessbus 7 mit den anderen IEDs ausgetauscht.

Darüberhinaus sind die IEDs auch über einen Stationsleitbus 4 miteinander verbunden. Über diesen Stationsleitbus 4 werden auch die SSAF-Funktionen nach dem oben beschriebenen Verfahren ausgetauscht.

Figur 3 stellt ein weiteres Ausführungsbeispiel der erfindungsgemäßen Vorrichtung dar. Das in Figur 3 dargestellte Ausführungsbeispiel unterscheidet sich von dem in Figur 2 dargestellten Ausführungsbeispiel dadurch, dass lediglich ein Stationsleitbus 4 vorgesehen ist, wohingegen der Prozessbus 7 fehlt. Mit anderen Worten können die IEDs 2 nur dezentrale Schutzfunktionen übernehmen. Wiederum sind die IEDs 2 jeweils mit einem Wandlereingang ausgestattet, bei dem sie mit einem Strom- oder Spannungswandler 3 verbunden sind. Über den Stationsleitbus 4 ist die erfindgunsgemäße Vorrichtung 1 wie auch beim Ausführungsbeispiel gemäß Figur 2 mit einem Control Center 6 verbunden.

## Patentansprüche

1. Vorrichtung (1) zum Schutz eines Elektroenergieversorgungsnetzes sowie zur Automatisierung und Steuerung von Komponenten einer elektrischen Einrichtung mit wenigstens zwei miteinander vernetzten IEDs (2), die jeweils über eine Vorverarbeitungseinheit mit wenigstens einem Messsensor (3) verbunden sind, der jeweils an einer Messstelle eines Energieversorgungsnetzes zum Erfassen einer Messgröße eingericht ist, die den Zustand des Elektroenergieversorgungsnetztes charakterisiert, wobei die Vorverarbeitungseinheit eingangsseitig mit den Messsensoren (3) verbunden ist und zum Übertragen von ausgangseitig bereitgestellten Messwerten an wenigstens eine IED (2) eingerichtet sind, und wobei jede IED (2) zur Ausführung von zuvor festgelegten Schutz-, Steuer- und/oder Automatisierungsfunktionen (SSAF) eingerichtet ist,
**dadurch gekennzeichnet, dass**
eine Orchestrierungssoftware vorgesehen ist, die ein Orchestrierungsverfahren bereitstellt, das basierend auf einem Leader-Election-Verfahren eine dynamische Verteilung der SSAF auf die IEDs (2) vornimmt.

2. Vorrichtung (1) nach Anspruch 1,
**dadurch gekennzeichnet, dass**
mehrere Messensoren (3) vorgesehen sind, die zum Erfassen einer in dem Elektroenergieversorgungsnetz herrschenden Spannung und/oder zum Erfassen eines in dem Elektroenergieversorgungsnetz fließenden Stromes eingerichtet sind.

3. Vorrichtung (1) nach einem der vorhergehenden Ansprüche,
**dadurch gekennzeichnet, dass**
jede IED (2) einen Ein- und einen Ausgang für einen Prozessbus (4) aufweist, über den die IEDs (2) miteinander vernetzt sind.

4. Vorrichtung (1) nach einem der vorhergehenden Ansprüche,
**dadurch gekennzeichnet, dass**
jede IED (2) über einen Ein- und Ausgang für einen Stationsbus verfügt.

5. Vorrichtung (1) nach einem der vorhergehenden Ansprüche,
**dadurch gekennzeichnet, dass**
die Vorverarbeitungseinheiten zum Erzeugen synchronisierter Messwerte eingerichtet sind.

6. Vorrichtung (1) nach einem der vorhergehenden Anspüche,
**dadurch gekennzeichnet, dass**
jede IED (2) über einen binären Ein- und Ausgang aufweist.

7. Vorrichtung (1) nach einem der vorgehenden Ansprüche,
**dadurch gekennzeichnet, dass**
mehrere IEDs (2) eine CPU mit einer mehr als 4000 MIPS im Vergleich mit dem Dhrystone Benchmark aufweisen.

8. Verfahren zum Schutz eines Elektroenergieversorgungsnetzes sowie zur Automatisierung und Steuerung von Komponenten eines Umspannwerks mit den Schritten:
- Erfassen einer den Zustand des Elektroenergieversorgungsnetzes charakterisierenden Messgröße an mehreren Messstellen durch Messsignale bereitstellenden Messsensoren (2),
- Übertragen der Messsignale an wenigstens eine Vorverarbeitungseinheit,
- Erzeugen von digitalen Messwerten aus den Messsignalen durch die Vorverarbeitungseinheit,
- Senden der Messwerte an wenigstens eine IED (2), wobei die IEDs (2) Schutz-, Steuer- und Automatisierungsfunktionen (SSAF) ausführen,
**dadurch gekennzeichnet, dass**
die SSAF mithilfe eines Orchestrierungsverfahrens dynamisch auf die IEDs (2) verteilt werden.
